# FASCICULE DE BREVET EUROPEEN

(11) **EP 3 172 082 B1**
(45) Date de publication et mention de la délivrance du brevet: **14.04.2021**
(21) Numéro de dépôt: 15745524.7
(22) Date de dépôt: 24.06.2015
(51) Int. Cl.: B60N 2/02, B60N 2/42, B60N 2/16, B60N 2/68

(54) **DISPOSITIF D'INTERFACE POUR LA CONNEXION À DES CONNECTEURS DE CÂBLES D'ÉQUIPEMENTS D'UN SIÈGE DE VÉHICULE**
SCHNITTSTELLENVORRICHTUNG ZUM ANSCHLUSS AN KABELVERBINDER FÜR FAHRZEUGSITZAUSRÜSTUNG
INTERFACE DEVICE FOR CONNECTING TO CABLE CONNECTORS FOR VEHICLE SEAT EQUIPMENT

(30) Priorité: 23.07.2014 FR 1457102
(43) Date de publication de la demande: 31.05.2017
(73) Titulaire: PSA Automobiles SA, 78300 Poissy (FR)
(72) Inventeur: FOMPERINE, Stephan, 94440 Villecresnes (FR); VERCAYGNE-BAT, Guy Noel, 78370 Plaisir (FR)
(86) Numéro de dépôt international: PCT/FR2015/051700
(87) Numéro de publication internationale: WO 2016/012678

(56) Documents cités:
- WO-A1-2013/167522
- DE-A1-102008 027 869
- DE-A1-102012 020 711
- FR-A1- 2 924 390
- FR-A1- 2 986 482
- FR-A3- 2 924 391

## Description

L'invention concerne les sièges de véhicule, et plus précisément certains dispositifs d'interface qui équipent les armatures d'assise de certains sièges de véhicule.

Certains sièges de véhicule, éventuellement de type automobile, comprennent des équipements électriques qui doivent être connectés à des câbles électriques faisant partie du faisceau électrique de leur véhicule. Ces équipements électriques ne provenant généralement pas d'un même fabricant, il n'est pas possible de les connecter tous à un même connecteur solidarisé à l'armature d'assise. Pour éviter d'avoir à gérer des boucles dynamiques sous le siège et des mouvements relatifs des câbles électriques par rapport à leurs connecteurs, on est contraint de solidariser à son armature d'assise une pièce d'interface sur laquelle sont rapportés les connecteurs associés aux différents équipements dans des endroits qui doivent être suffisamment accessibles pendant les phases d'assemblage du siège et compatibles avec les réglages de position de ce dernier.

La conception d'une pièce d'interface est donc assez complexe du fait des nombreuses contraintes qui doivent être prises en compte pour la rendre la plus ergonomique possible à installer et facilement utilisable une fois installée.

La plupart des pièces d'interface connues satisfont aux conditions ergonomiques et d'utilisation précitées, mais, hélas, elles ne sont généralement adaptées qu'à un unique type d'architecture d'armature d'assise et à un unique type de fixation de l'armature d'assise (avec ou sans réglage en hauteur). Par conséquent, ces pièces d'interface ne peuvent généralement pas être utilisées aussi bien dans des sièges avec réglage en hauteur (ou rehaussables) que dans des sièges sans réglage en hauteur (ou non rehaussables), quel que soit leur lieu d'implantation (droit ou gauche). Le document Fr 2986482 montre un tel dispositif d'interface.

L'invention a donc notamment pour but d'améliorer la situation.

Elle propose notamment à cet effet un dispositif d'interface, destiné à équiper un siège de véhicule comprenant une armature d'assise comportant deux pièces longitudinales couplées entre elles par un axe transversal, et comprenant une pièce d'interface sur laquelle est destiné à être solidarisé au moins un connecteur électrique propre à être connecté à au moins un câble électrique d'un équipement du siège.

Ce dispositif d'interface se caractérise par le fait que sa pièce d'interface comprend au moins une patte de clippage propre à être clippée sur l'axe transversal pour assurer sa solidarisation, à rotation, à ce dernier, et des premiers moyens de couplage propres à être couplés à un fil transversal, tendu entre les pièces longitudinales, pour placer la pièce d'interface selon une orientation choisie par rapport à l'axe transversal.

Un tel dispositif d'interface s'avère non seulement ergonomique à installer et facilement utilisable une fois installé, mais également utilisable aussi bien dans un siège avec réglage en hauteur (ou rehaussable) (droit ou gauche) que dans un siège sans réglage en hauteur (ou non rehaussable) (droit ou gauche).

Le dispositif d'interface selon l'invention comporte aussi les caractéristiques suivantes:
- chaque patte de clippage peut présenter une forme incurvée et peut être déformable de manière à permettre un couplage à des axes transversaux qui présentent un diamètre compris dans un intervalle de valeurs prédéfinies ;
- sa pièce d'interface peut comprendre au moins une nervure définissant une zone d'appui pour l'axe transversal, complémentaire de zone(s) d'appui définie(s) pour cet axe transversal par chaque patte de clippage

Le dispositif d'interface selon l'invention peut comporter d'autres caractéristiques qui peuvent être prises séparément ou en combinaison, et notamment:
- les premiers moyens de couplage peuvent être agencés sous la forme d'une rainure transversale définie dans une première sous-partie légèrement déformable de la pièce d'interface et propre à loger une partie du fil transversal ;
   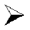 la première sous-partie peut comprendre dans une partie intermédiaire de la rainure transversale une ouverture d'indexation propre à loger une partie intermédiaire incurvée du fil transversal, de manière à permettre une indexation de la position de la pièce d'interface par rapport à l'axe transversal ;
- sa pièce d'interface peut comprendre au moins un deuxième moyen de couplage propre à permettre la solidarisation d'un connecteur électrique ;
- sa pièce d'interface peut comprendre au moins un troisième moyen de couplage propre à permettre la solidarisation d'un quatrième moyen de couplage solidarisé à un câble d'un équipement du siège.

L'invention propose également un siège, destiné à équiper un véhicule, et comprenant une armature d'assise comportant deux pièces longitudinales couplées entre elles par un axe transversal, et un dispositif d'interface, du type de celui présenté ci-avant, et solidarisé à rotation à cet axe transversal.

L'axe transversal d'un tel siège peut, par exemple, être couplé à deux bielles faisant partie d'un mécanisme de rehausse propre à faire varier la position verticale de l'armature d'assise.

L'invention propose également un véhicule, éventuellement de type automobile, et comprenant au moins un siège du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective de dessous, une partie d'une assise de siège rehaussable montée sur des glissières et équipée d'un dispositif d'interface selon l'invention,
- la figure 2 illustre schématiquement, dans une vue du dessous (plan XY), la partie d'assise de la figure 1 avec son dispositif d'interface,
- la figure 3 illustre schématiquement, dans une vue en perspective de dessus, le dispositif d'interface de la figure 1 couplé à l'axe transversal et au fil transversal de l'assise,
- la figure 4 illustre schématiquement, dans une vue en perspective du côté avant, le dispositif d'interface de la figure 1 avant son couplage à une assise,
- la figure 5 illustre schématiquement, dans une vue de côté (plan XZ), le dispositif d'interface de la figure 1 avant son couplage à une assise, et
- la figure 6 illustre schématiquement, dans une vue du dessous (plan XY), le dispositif d'interface de la figure 1 avant son couplage à une assise.

L'invention a notamment pour but de proposer un dispositif d'interface DI destiné à équiper un siège de véhicule.

On considère dans ce qui suit, à titre d'exemple non limitatif, que le siège est destiné à équiper un véhicule de type automobile, comme par exemple une voiture. Mais l'invention n'est pas limitée à ce type de véhicule. Elle concerne en effet tout véhicule comportant au moins une surface sur laquelle peut être installé au moins un siège. Par conséquent, elle concerne les véhicules terrestres, les véhicules maritimes (ou fluviaux) et les aéronefs.

Par ailleurs, on considère dans ce qui suit, à titre d'exemple non limitatif, que le siège est de type monoplace. Mais l'invention n'est pas limitée à ce type de siège. Elle concerne en effet tout type de siège pouvant accueillir, en position assise, au moins une personne. Par conséquent, il pourra également s'agir d'une banquette comportant au moins un dossier.

Enfin, on considère dans ce qui suit, à titre d'exemple non limitatif, que le siège est de type rehaussable, et donc qu'il est équipé d'un mécanisme de rehausse permettant de faire varier la position verticale de leur assise. Mais l'invention n'est pas limitée à ce type de siège. Elle concerne en effet également les sièges non rehaussables.

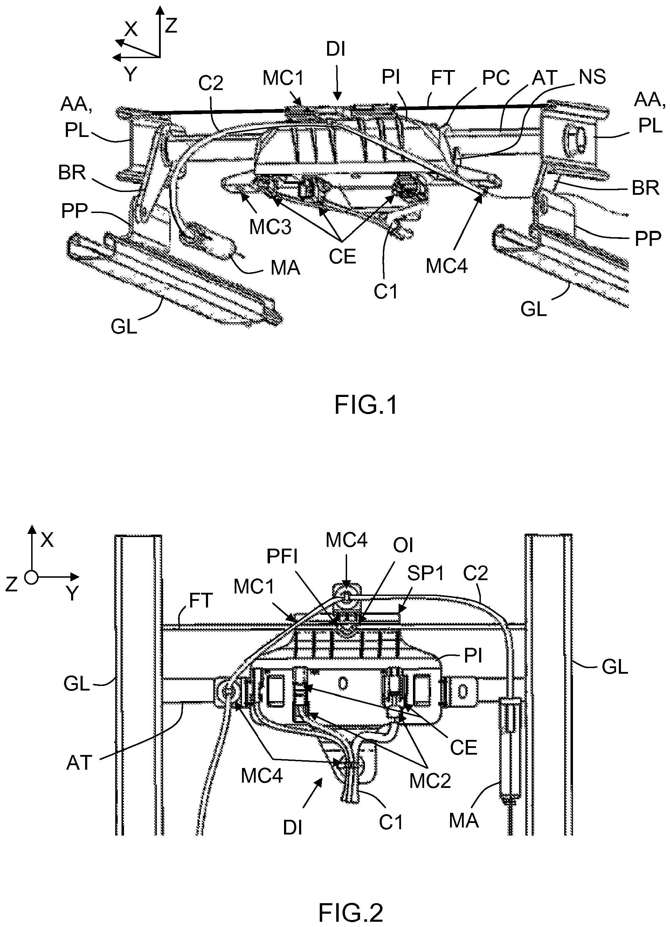

On a schématiquement illustré sur la figure 1 une partie d'une assise d'un siège (ici rehaussable) montée sur des glissières GL et équipée d'un dispositif d'interface DI selon l'invention.

Sur les figures 1 à 6, la direction X est la direction longitudinale du véhicule (et donc du siège), laquelle est sensiblement parallèle aux côtés latéraux comportant les portières latérales, la direction Y est la direction transversale du véhicule, laquelle est perpendiculaire à la direction X, et la direction Z est la direction verticale du véhicule, laquelle est perpendiculaire aux directions longitudinale X et transversale Y.

L'assise comprend une armature d'assise AA, très partiellement illustrée, et destinée à recevoir un garnissage d'assise et une éventuelle housse entourant ce garnissage. En fait, sur la figure 1, seules des pièces longitudinales PL (ici deux profilés), un axe transversal AT et un fil transversal FT tendu (et rigide) de l'armature d'assise AA ont été représentés.

L'axe transversal AT assure un couplage rigide entre les deux pièces longitudinales PL. Il est ici monté à rotation sur les deux pièces longitudinales PL, et des extrémités supérieures de deux bielles BR d'un mécanisme de rehausse sont solidarisées fixement à lui. Les extrémités inférieures de ces deux bielles BR sont solidarisées à deux pièces de couplage PP qui sont agencées pour coulisser dans les glissières GL.

Le fil transversal FT fait ici partie de l'armature d'assise AA du fait qu'il est destiné à supporter une partie avant du garnissage d'assise. Mais dans une variante de réalisation, il pourrait faire partie du dispositif d'interface DI et être rapporté (par exemple par soudage) sur les pièces longitudinales PL de l'armature d'assise AA, après la fabrication de cette dernière (AA). Ce fil transversal FT est par exemple réalisé en acier.

On notera que lorsque le siège est dépourvu de mécanisme de rehausse, l'axe transversal AT est solidarisé fixement aux deux pièces longitudinales PL. On notera également que le siège pourrait être fixe par rapport au plancher. Dans ce cas, son armature d'assise AA est montée indirectement, via des piètements, sur un plancher de véhicule.

L'armature d'assise AA est par ailleurs destinée à être couplée, éventuellement à rotation, à une armature d'un dossier de son siège, qui est également équipée d'un garnissage de dossier et d'une éventuelle housse.

On notera que dans l'exemple illustré non limitativement sur les figures 1 et 2 le siège est également équipé d'un mécanisme MA permettant de faire basculer instantanément son dossier afin de permettre l'accès aux places arrière. Un tel mécanisme d'accès aux places arrière MA équipe généralement un siège avant d'un véhicule ne comprenant que deux portes avant donnant accès à un rang avant de sièges et à un rang arrière de sièges.

Comme illustré sur les figures 1 à 6, un dispositif d'interface DI, selon l'invention comprend au moins une pièce d'interface PI sur laquelle est destiné à être solidarisé au moins un connecteur électrique CE qui est lui-même propre à être connecté à au moins un câble électrique C1 d'un équipement électrique du siège SI.

Cette pièce d'interface PI comprend au moins une patte de clippage PC et des premiers moyens de couplage MC1.

Chaque patte de clippage PC est propre à être clippée sur l'axe transversal AT pour assurer sa solidarisation, à rotation, à ce dernier (AT), comme illustré sur les figures 1 et 2.

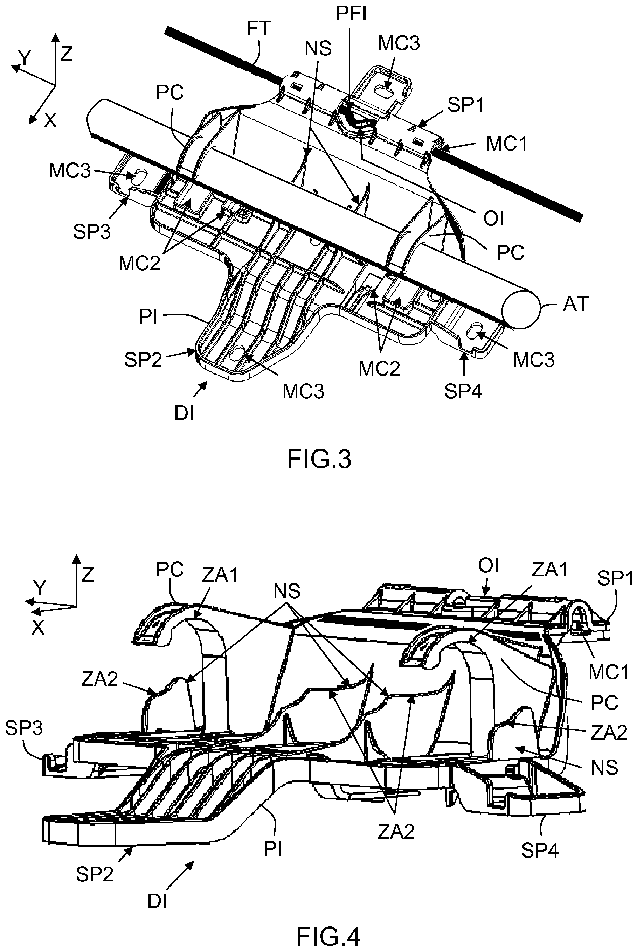

On notera que dans l'exemple illustré non limitativement sur les figures 3 à 6 la pièce d'interface PI comprend deux pattes de clippage PC. Mais elle pourrait n'en comporter qu'une seule ou bien plus de deux (par exemple trois).

Par ailleurs, et comme illustré non limitativement sur les figures 3 à 6, chaque patte de clippage PC peut présenter une forme incurvée (comme une espèce de griffe ou crochet), qui définit intérieurement une première zone d'appui ZA1 pour un axe transversal AT, et peut être déformable (ou flexible) de manière à permettre son couplage à des axes transversaux AT qui présentent un diamètre compris dans un intervalle de valeurs prédéfinies. Ainsi, un même dispositif d'interface DI peut être avantageusement couplé à différentes armatures d'assise AA disposant d'axes transversaux AT de diamètres différents.

On notera, comme illustré non limitativement sur les figures 3 à 5, que la pièce d'interface PI peut également et éventuellement comprendre au moins une nervure NS qui définit une seconde zone d'appui ZA2 pour l'axe transversal AT, complémentaire de chaque première zone d'appui ZA1 définie pour ce même axe transversal AT par chaque patte de clippage PC. Dans l'exemple illustré où les « griffes » des pattes de clippage PC sont destinées à être situées au-dessus de l'axe transversal AT, les premières zones d'appui ZA1 sont situées dans une partie supérieure, tandis que les secondes zones d'appui ZA2 sont situées dans une partie inférieure du fait que les nervures NS sont destinées à être situées en-dessous de l'axe transversal AT. L'appui de l'axe transversal AT peut être ainsi réparti sur les nervure(s) NS et patte(s) de clippage PC.

On notera également que dans l'exemple illustré non limitativement sur les figures 3 à 5 la pièce d'interface PI comprend deux nervures « centrales » NS et deux nervures « latérales » NS. Mais elle pourrait en comporter un nombre différent de quatre (par exemple une seule ou deux ou encore trois).

On notera également que chaque nervure NS peut avantageusement participer à la rigidité de la partie centrale de la pièce d'interface PI qui comprend chaque patte de couplage PC.

Les premiers moyens de couplage MC1 sont propres à être couplés au fil transversal FT (qui est tendu entre les pièces longitudinales PL), pour placer sa pièce d'interface PI selon une orientation choisie par rapport à l'axe transversal AT.

L'installation de la pièce d'interface PI peut se faire en commençant par clipper chaque patte de clippage PC sur l'axe transversal AT, puis en entraînant en rotation la pièce d'interface PI, clippée autour de l'axe transversal AT, jusqu'à ce que ses premiers moyens de couplage MC1 soient couplés au fil transversal FT. La pièce d'interface PI est alors installée dans son orientation choisie.

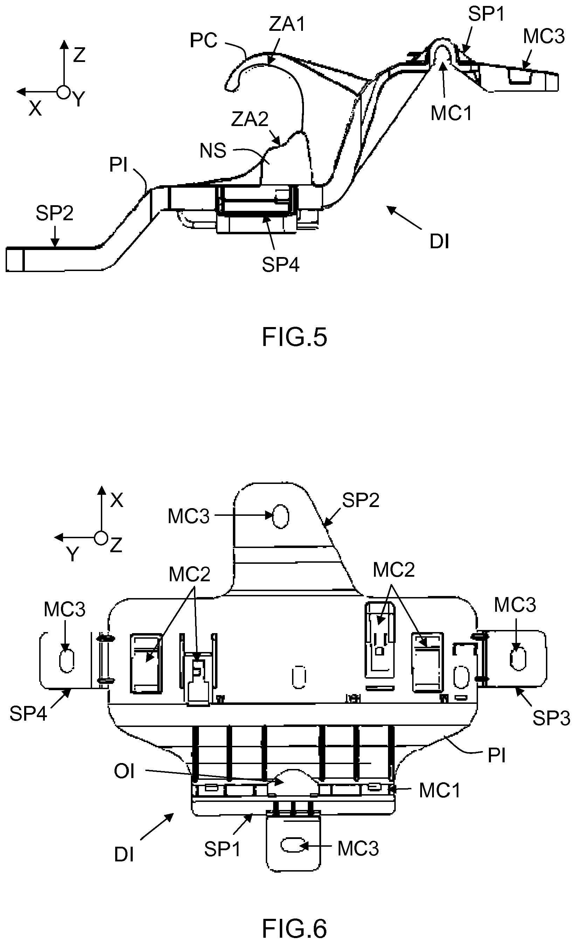

Par exemple, et comme illustré non limitativement sur les figures 1 à 6, les premiers moyens de couplage MC1 peuvent être agencés sous la forme d'une rainure transversale qui est définie dans une première sous-partie SP1, légèrement déformable, de la pièce d'interface PI, et qui est propre à loger une partie du fil transversal FT. Le caractère légèrement déformable de la première sous-partie SP1 est destiné à faciliter l'introduction du fil transversal FT dans la rainure transversale MC1, puis son emprisonnement dans cette dernière (MC1). On notera que cet emprisonnement peut être facilité par la présence de petites protubérances définies sur les bords transversaux de la rainure transversale MC1 et recouvrant très partiellement cette dernière (MC1) (voir figure 6).

On notera également, comme illustré non limitativement sur les figures 4 et 6, que la première sous-partie SP1 peut avantageusement comprendre dans une partie intermédiaire de sa rainure transversale MC1 une ouverture d'indexation OI qui est propre à loger une partie intermédiaire incurvée (ou tordue) PFI du fil transversal FT afin de permettre une indexation de la position de la pièce d'interface PI par rapport à l'axe transversal AT. On comprendra en effet que le logement de cette partie intermédiaire incurvée PFI dans l'ouverture d'indexation OI garantit que la pièce d'interface PI est précisément positionnée dans son emplacement prédéfini et avec son orientation prédéfinie.

Comme illustré non limitativement sur les figures 2, 3 et 6, la pièce d'interface PI peut également et éventuellement comprendre au moins un deuxième moyen de couplage MC2 propre à permettre la solidarisation d'un connecteur électrique CE permettant la connexion d'au moins un câble électrique C1 ou C2 de l'un des équipements du siège. Chaque deuxième moyen de couplage MC2 constitue alors une interface de fixation dont l'agencement et la position prédéfinie sont parfaitement adaptés au connecteur CE qu'il peut recevoir. Cela facilite notablement l'installation des connecteurs CE, puisqu'il n'est pas nécessaire de rapporter sur la pièce d'interface PI des moyens de fixation destinés à solidariser fixement ces connecteurs CE.

Dans l'exemple illustré non limitativement sur les figures 2, 3 et 6, la pièce d'interface PI comprend quatre deuxièmes moyens de couplage MC2 définis sur sa partie centrale. Mais elle pourrait comporter un nombre de deuxièmes moyens de couplage MC2 différent de quatre (par exemple un ou deux ou encore trois, voire plus de quatre). On comprendra que tous les deuxièmes moyens de couplage MC2 ne sont pas forcément utilisés. C'est notamment le cas dans l'exemple illustré sur les figures 1 et 2, où trois des quatre deuxièmes moyens de couplage MC2 sont couplés à trois connecteurs CE.

Par ailleurs, comme illustré non limitativement sur les figures 1 à 6, la pièce d'interface PI peut également et éventuellement comprendre au moins un troisième moyen de couplage MC3 propre à permettre la solidarisation d'un quatrième moyen de couplage MC4 solidarisé à un câble C1 ou C2 d'un équipement du siège. Comme illustré, chaque troisième moyen de couplage MC3 peut se présenter sous la forme d'un trou traversant défini dans une sous-partie SP2, SP3 ou SP4 qui prolonge la partie centrale de la pièce d'interface PI suivant la direction transversale Y ou longitudinale X. Un tel trou traversant MC3 peut alors recevoir une partie adaptée à cet effet d'un quatrième moyen de couplage MC4 se présentant, par exemple, sous la forme d'une agrafe de fixation solidarisée à un câble C1 ou C2 (éventuellement par un lien).

Dans l'exemple illustré sur les figures 1 et 2, deux troisièmes moyens de couplage MC3 sont couplés à deux agrafes MC4 solidarisées au câble C2 du mécanisme d'accès aux places arrière MA, et un troisième moyen de couplage MC3 est couplé à une agrafe MC4 solidarisée aux câbles C1 qui sont connectés aux trois connecteurs CE.

La présence des troisièmes moyens de couplage MC3 facilite notablement l'installation des câbles sous l'armature d'assise AA, puisqu'il n'est pas nécessaire de rapporter sur la pièce d'interface PI des moyens de fixation destinés à solidariser fixement ces câbles. En outre, cela évite la formation de boucles dynamiques sous le siège et/ou que des câbles pendent sous le siège et soient endommagés par les pieds des passagers situés derrière ce dernier.

On notera que dans l'exemple illustré non limitativement sur les figures 1 à 6, la pièce d'interface PI présente un haut niveau de symétrie. En fait seule la sous-partie SP2 n'est pas symétrique par rapport au plan XZ. Mais elle pourrait l'être. Grâce à ce haut niveau de symétrie, la pièce d'interface PI peut être très avantageusement utilisée dans des sièges rehaussables droit ou gauche, ou dans des sièges non rehaussables droit ou gauche.

On notera également que la pièce d'interface PI peut être avantageusement réalisée par moulage d'une matière plastique, comme par exemple, mais non limitativement, le PHC31-81 ou l'ABS. D'une manière générale la matière est choisie en fonction de la tenue demandée de la pièce d'interface PI sur son support et/ou d'autres contraintes (par exemple imposées par le milieu environnant).

## Revendications

1. Dispositif d'interface (DI) pour un siège de véhicule comprenant une armature d'assise (AA) comportant deux pièces longitudinales (PL) couplées entre elles par un axe transversal (AT), ledit dispositif (DI) comprenant une pièce d'interface (PI) sur laquelle est destiné à être solidarisé au moins un connecteur électrique (CE) propre à être connecté à au moins un câble électrique (C1) d'un équipement dudit siège, **caractérisé en ce que** ladite pièce d'interface (PI) comprend au moins une patte de clippage (PC) propre à être clippée sur ledit axe transversal (AT) pour assurer sa solidarisation, à rotation, à ce dernier (AT), chaque patte de clippage (PC) présentant une forme incurvée et étant déformable de manière à permettre un couplage à des axes transversaux (AT) présentant un diamètre compris dans un intervalle de valeurs prédéfinies, et des premiers moyens de couplage (MC1) propres à être couplés à un fil transversal (FT), tendu entre lesdites pièces longitudinales (PL), pour placer ladite pièce d'interface (PI) selon une orientation choisie par rapport audit axe transversal (AT), ladite pièce d'interface (PI) comprenant au moins un deuxième moyen de couplage (MC2), propre à permettre la solidarisation d'un connecteur électrique (CE), et au moins un troisième moyen de couplage (MC3) propre à permettre la solidarisation d'un quatrième moyen de couplage (MC4) solidarisé à un câble (C2) d'un équipement dudit siège, **caractérisé en ce que** ladite pièce d'interface (PI) comprend au moins une nervure (NS) définissant une zone d'appui (ZA2) pour ledit axe transversal (AT), complémentaire de zone(s) d'appui (ZA1) définie(s) pour ledit axe transversal (AT) par chaque patte de clippage (PC).

2. Dispositif selon la revendication 1, **caractérisé en ce que** lesdits premiers moyens de couplage (MC1) sont agencés sous la forme d'une rainure transversale définie dans une première sous-partie (SP1) légèrement déformable de ladite pièce d'interface (PI) et propre à loger une partie dudit fil transversal (FT).

3. Dispositif selon la revendication 2, **caractérisé en ce que** ladite première sous-partie (SP1) comprend dans une partie intermédiaire de ladite rainure transversale (MC1) une ouverture d'indexation (OI) propre à loger une partie intermédiaire incurvée (PFI) dudit fil transversal (FT) de manière à permettre une indexation de la position de ladite pièce d'interface (PI) par rapport audit axe transversal (AT).

4. Siège de véhicule, comprenant une armature d'assise (AA) comportant deux pièces longitudinales (PL) couplées entre elles par un axe transversal (AT), **caractérisé en ce qu'**il comprend en outre au moins un dispositif d'interface (DI) selon l'une des revendications précédentes, solidarisé à rotation audit axe transversal (AT).

5. Siège selon la revendication précédente, **caractérisé en ce que** ledit axe transversal (AT) est couplé à deux bielles (BR) faisant partie d'un mécanisme de rehausse propre à faire varier la position verticale de ladite armature d'assise (AA).

6. Véhicule, **caractérisé en ce qu'**il comprend au moins un siège selon l'une des revendications 4 ou 5.

## Patentansprüche

1. Schnittstellenvorrichtung (DI) für einen Fahrzeugsitz mit einer Sitzarmatur (AA) mit zwei Längsteilen (PL), die miteinander über eine Querachse (AT) gekoppelt sind, wobei die Vorrichtung (DI) ein Schnittstellenstück (PI) umfasst, an dem mindestens ein elektrischer Verbinder (CE) fest verbunden werden kann, der mit mindestens einem elektrischen Kabel (C1) verbunden werden kann Einrichtung für den Sitz, **dadurch gekennzeichnet, dass** das Schnittstellenteil (PI) mindestens eine Cliplasche (PC) umfasst, die auf der Querachse (AT) geklickt werden kann, um ihre drehbare Verbindung mit der Querachse (AT) zu gewährleisten, wobei jede Cliplasche (PC) eine gekrümmte Form aufweist und verformbar ist, um eine Verbindung mit Querachsen zu ermöglichen (10) AT) mit einem Durchmesser innerhalb eines vorgegebenen Bereichs von Werten und mit ersten Koppelmitteln (MC1), die mit einem zwischen den Längsteilen (PL) gespannten Querdraht (FT) gekoppelt werden können, um das Schnittstellenstück (PI) in einer gewählten Orientierung bezüglich der Querachse (AT) anzuordnen, wobei das Schnittstellenstück (PI) mindestens ein zweites Mittel aufweist Kupplung (MC2), die geeignet ist, die Verbindung eines elektrischen Verbinders (CE) zu ermöglichen, und mindestens ein drittes Kopplungsmittel (MC3), das die Verbindung eines vierten Kopplungsmittel (MC4) ermöglicht, das mit einem Kabel (C2) einer Ausrüstung des Sitzes verbunden ist, **dadurch gekennzeichnet, dass** das Schnittstellenstück (PI) mindestens eine Rippe (NNS) aufweist einen Stützbereich (ZA2) für die Querachse (AT), der zu den Stützbereichen (ZA1) komplementär ist, die für die Querachse (AT) durch jede Klipplasche (PC) definiert sind.

2. Vorrichtung nach Anspruch 1, **dadurch gekennzeichnet, dass** die ersten Kopplungsmittel (MC1) als Quernut ausgebildet sind, die in einem leicht verformbaren ersten Teilabschnitt (SP1) des Schnittstellenteils (PI) definiert ist und einen Teil des Querdrahtes (FT) aufnehmen kann.

3. Vorrichtung nach Anspruch 2, **dadurch gekennzeichnet, dass** der erste Teilabschnitt (SP1) in einem Zwischenabschnitt der Quernut (MC1) eine Indexierungsöffnung (OI) aufweist, die geeignet ist, einen gekrümmten Zwischenabschnitt (PFI) des Querdrahtes (FT) aufzunehmen, um eine Indexierung der Position des Schnittstellenabschnitts (PI) relativ zu der Querachse (AT zu ermöglichen ABI.

4. Fahrzeugsitz, umfassend eine Sitzarmatur (AA) mit zwei Längsteilen (PL), die miteinander über eine Querachse (AT) gekoppelt sind, **dadurch gekennzeichnet, dass** er ferner mindestens eine Schnittstellenvorrichtung (DI) nach einem der vorhergehenden Ansprüche umfasst, die drehfest mit der Querachse (AT) verbunden ist.

5. Sitz nach dem vorhergehenden Anspruch, **dadurch gekennzeichnet, dass** die Querachse (AT) mit zwei Pleueln (BR) gekoppelt ist, die Teil eines Aufwärtsmechanismus sind, der geeignet ist, die vertikale Position des Sitzgestells (AA) zu verändern.

6. Fahrzeug, **dadurch gekennzeichnet, dass** es mindestens einen Sitz nach einem der Ansprüche 4 oder 5 umfasst.

## Claims

1. Interface device (DI) for a vehicle seat comprising a seating structure (AA) consisting of two longitudinal parts (PL) coupled between them by a transverse axis (AT), that device (DI) consisting of an interface part (PI) on which at least one electrical connector (CE) capable of being connected to at least one electrical cable (C1) of an equipment of that seat, **characterized in that** part interface (PI) shall include at least one clippage (PC) tab that is suitable for clipping on the said transverse axis (AT) to ensure its rotation (AT) solidarity, with each clippage (PC) tab that is curved and deformable in such a way as to allow coupling to transverse axes (AT) having a diameter within a predetermined range of values, and the first means coupling (MC1) capable of being coupled to a transverse wire (FT), stretched between the said longitudinal parts (PL), to place the said interface part (PI) in an orientation chosen in relation to that transverse axis (AT), the said interface part (PI) comprising at least one second means of coupling (MC2), which would enable the coupling of an electric connector (CE), and at least one third means of coupling (EC) MC3) capable of enabling the coupling of a fourth means (MC4), which is connected to a cable (C2) of equipment **in that** seat, **characterized in that** the interface part (PI) includes at least one rib (NS) defining a support zone (ZA2) for that transverse axis (AT), complementary to the support zone(s) defined for that transverse axis (AT) by each clipboard (PC).

2. A device according to Claim 1, **characterized in that** the said first means of coupling (MC1) are arranged in the form of a transverse groove defined in a first subpart (SP1) slightly deformable of the said interface part (PI) and suitable for housing part of the said transverse wire (FT).

3. A device in accordance with Claim 2, **characterized by** the fact that the first subpart (SP1) includes in an intermediate part of the said transverse groove (MC1) an indexing opening (OI) suitable for housing a curved intermediate part (PFI) of the said transverse wire (FT) in such a way as to enable an indexing of the position of the said interface part (PI) in relation to that transverse axis (AT).

4. Vehicle seat, consisting of a seat frame (AA) consisting of two longitudinal parts (PL) coupled together by a transverse axis (AT), **characterized in** addition by at least one interface device (DI) according to one of the preceding claims, which is rotated with the transverse axis (AT).

5. Seat according to the previous claim, characterized as the said transverse axis (AT) is coupled with two biels (BR) which are part of a lifting mechanism that can vary the vertical position of the said seat frame (AA).

6. Vehicle, **characterized in that** it includes at least one seat according to one of claims 4 or 5.
